# EUROPÄISCHE PATENTSCHRIFT

(11) **EP 0 766 071 B1**
(45) Veröffentlichungstag und Bekanntmachung des Hinweises auf die Patenterteilung: **10.04.2002**
(21) Anmeldenummer: 95115281.8
(22) Anmeldetag: 28.09.1995
(51) Int. Cl.: G01F 23/296, B06B 1/06

(54) **Ultraschallwandler**
Ultrasonic transducer
Sonde ultrasonique

(43) Veröffentlichungstag der Anmeldung: 02.04.1997
(73) Patentinhaber: ENDRESS + HAUSER GMBH + CO., D-79689 Maulburg (DE)
(72) Erfinder: Eckert, Manfred, D-79674 Todtnau (DE)
(74) Vertreter: Morstadt, Volker, Dipl.-Ing.

(56) Entgegenhaltungen:
- EP-A- 0 498 015
- DE-C- 4 323 134
- DE-C- 4 325 398
- US-A- 5 121 628

## Beschreibung

Die Erfindung betrifft einen Ultraschallwandler, insb. zur Messung eines Füllstands, z.B. in einem Behälter, oder zur Messung einer Füllhöhe, z.B. in einem Gerinne oder auf einem Förderband.

Ein von dem Ultraschallwandler ausgesendeter Ultraschall-Impuls wird an der Oberfläche des Füllgutes reflektiert. Die Laufzeit des Ultraschall-Impulses von dem Sensor zur Oberfläche und zurück wird ermittelt und daraus der Füllstand bzw. die Füllhöhe bestimmt.

Derartige Ultraschallwandler werden in vielen Industriezweigen, z.B. in der Wasser- und Abwasserbranche und in der Chemie, eingesetzt. Besonders in der Chemie sind Ultraschallwandler von hoher chemischer Beständigkeit erforderlich, die in einem weiten Temperaturbereich einsetzbar sind.

Die Ultraschallwandler weisen vorzugsweise einen kleinen Durchmesser auf, beispielsweise damit die Öffnungen des Behälters oder eines Schallführungsrohres, in denen sie zu montieren sind, ebenfalls klein sein können.

Zur Erzeugung des Ultraschall-Impulses dient üblicherweise ein in einem topfartigen Gehäuse angeordnetes scheibenförmiges piezoelektrisches Element, das zu Schwingungen angeregt wird. Der Boden des Gehäuses hat die Funktion einer Membran, auf die die Schwingungen übertragen und von der die Ultraschall-Impulse dann abgestrahlt werden.

Zwischen dem piezoelektrischen Element und der Membran ist eine im folgenden als Anpaßschicht bezeichnete Kunststoffschicht zur Anpassung der akustischen Impedanz des piezoelektrischen Elements an die akustische Impedanz des Mediums, in das die Ultraschall-Impulse auszusenden sind, angeordnet.

Ein in dem Gehäuse verbleibender, durch eine membran-abgewandte Kreisfläche und eine zylindrische Mantelfläche des piezoelektrischen Elements begrenzter Hohlraum ist mit einer Dämpfungsschicht, z.B. aus einem Kunststoff, ausgefüllt. Diese Dämpfungsschicht dient dazu, die Abstrahlung von Schallenergie in radialer und in membran-abgewandter Richtung zu minimieren.

Solche Ultraschallwandler weisen üblicherweise einen Durchmesser von 7 cm bis 25 cm auf und werden in einem Frequenzbereich von 15 kHz bis 60 kHz betrieben. Je kleiner die Abmessungen des piezoelektrischen Elements und damit des Ultraschallwandlers sind, desto größer ist die Sendefrequenz.

Aufgrund des Temperaturverhaltens der Anpaßschicht, der Dämpfungsschicht, des piezoelektrischen Elements und des Gehäuses, insb. der Temperaturabhängigkeit der Schallgeschwindigkeiten und der Schallimpedanzen dieser Komponenten, ist deren Einsatz üblicherweise auf einen Temperaturbereich von -20 °C bis 80 °C beschränkt.

In der US-A 4,130,018 ist ein Ultraschallwandler beschrieben, mit
- einem topfförmigen, durch eine auflaminierte Membran abgeschlossenen Gehäuse,
- einem in dem Gehäuse angeordneten Sensorerelement zum Senden und Empfangen von Ultraschall,
- einer zwischen der Membran und dem Sensorelement angeordneten Anpaßschicht aus Polyurethan, in der Glashohlkugeln eingebettet sind,
- einer einen membran-abgewandten Abschnitt des Sensorelements umgebenden ersten Schicht aus Polyurethan zur Dämpfung,
   -- in deren direkt an das Sensorelement anschließenden Bereichen Bleikugeln zur Absorbtion von Schallenergie angeordnet sind,
- einer einen membran-zugewandten Abschnitt der Anpaßschicht koaxial umschließenden zweiten Schicht zur Dämpfung aus festem Polyurethan und
- einer einen im Gehäuse verbleibenden, durch die erste und die zweite Schicht und das Gehäuse begrenzten Hohlraum ausfüllenden dritten Dämfpungsschicht aus Polyurethanschaum.

Der beschriebene Ultraschallwandler wird mit einer Frequenz von 50 kHz betrieben und weist entsprechende Abmessungen auf. Der Sensor kann in einem Temperaturbereich von -30 °C bis 70 °C eingesetzt werden.

Da die auf dem Gehäuse auflaminierte Membran im Vergleich zur Anpaßschicht sehr dünn ist, treten durch sie über die Temperatur keine wesentlichen zusätzlichen Spannungen auf, die das Sensorelement mechanisch beanspruchen. Die Verbindungsstellen zwischen dem Gehäuse und der Membran setzen jedoch die chemische Beständigkeit des Ultraschallwandlers herab.

Damit möglichst konstante Schallgeschwindigkeiten und Schallimpedanzen vorliegen, ist die Anpaßschicht gemäß der US-A 4,130,018 ungefähr neunmal so dick wie die Membran auszubilden. Da die Membran auflaminiert ist, kann sie eine geringe Dicke aufweisen. Eine sehr dünne Membran, z.B. aus einem Thermoplast mit einer Dicke von 0,5 mm ist jedoch nicht diffusionsdicht. Langfristig diffundieren daher Gase durch die Membran hindurch und können eine Zerstörung der Verbindung zwischen der Anpaßschicht und der Membran bewirken.

Um einen maximalen Energietransfer durch die Anpaßschicht hindurch zu gewährleisten, sind Membran und Anpaßschicht so auszubilden, daß die Summe der Laufzeiten des Ultraschalls durch die Anpaßschicht und die Membran gleich einem Viertel oder einem ungradzahligen Vielfachen von einem Viertel der Periodendauer des Ultraschalls ist. Da die Anpaßschicht eine Dämpfung des Ultraschalls bewirkt, ist jedoch bei praktischen Anwendungen eine Laufzeit von einem Viertel der Periodendauer und nicht ein ungradzahliges Vielfaches davon zu fordern.

Da eine Mindestdicke der Membran durch die Forderung der chemischen Beständigkeit und der Diffusionsdichtheit durch die Anwendung bestimmt wird, liefern die beiden oben genannten Dimensionierungsregeln eine obere Grenze für den Frequenzbereich bzw. eine untere Grenze für den Durchmesser des Ultraschallwandlers.

In der EP-A-0 498 015 wird eine ähnliche Anpaßschicht aus einem Elastomer beschrieben, die Teil eines vorgefertigten topfförmigen Körpers ist. Allerdings ist hierbei jedoch keine Membran vorgesehen, so daß die zur optimalen Anpassung angegebene Dicke der Anpaßschicht nicht ohne weiteres bei Ultraschallwandlern mit einem topfförmigen, durch eine Membran abgeschlossenen Gehäuse angewendet werden kann. In Bezug auf eine chemische Beständigkeit der Anpaßschicht wird in der EP-A-0 498 015 nichts erwähnt. Bei dem in der EP-A-0 498 015 beschriebenen Ultraschallwandler ist außerdem eine weitere dämpfende Schicht vorgesehen, die rückseitig auf dem Sensorelement aufgebracht und die vom vorgefertigten Elastomerkörper aufgenommen ist.

In der US-A-5,121,628 wird ein Ultrallwandler beschrieben, bei dem die Membran vom eigentlichen, den Ultrallwandler aufnehmenden flanschartigen Gehäuse getrennt, auf einer Anpaßschicht auf dem Sensorelement angeordnet ist. Der Ultraschallwandler nach der US-A-5,121,628 ist zur direkten Montage auf einen Behälterflansch bestimmt. Um eine akustische Kopplung und dadurch bedingte Rückwirkungen zwischen dem Ultraschallwandler und dem Behälter zu vermeiden, verschließt die Membran zwei ineinander gesteckte topfförmigen Körper aus elastischem, dämpfenden Material und nicht das Gehäuse. Die US-A-5,121,628 gibt keine Hinweise darauf, wie die einzelnen Schichten in ihrer Wirkungsweise untereinander und zueienander und in Bezug auf den Ultraschallwandler optimiert werden können. Wegen des teilweise zur Atmosphäre offenen Gehäuses der Anordnung nach der US-A-5,121,628 ist die chemische Beständigkeit problematisch.

Es ist eine Aufgabe der Erfindung, einen Ultraschallwandler anzugeben, der eine hohe chemische Beständigkeit und einen kleinen Durchmesser aufweist und in einem sehr weiten Temperaturbereich einsetzbar ist.

Hierzu besteht die Erfindung in einem Ultraschallwandler mit
- einem topfförmigen, durch eine Membran abgeschlossenen Gehäuse,
- einem im Gehäuse angeordneten Sensorelement zum Senden und Empfangen von Ultraschall,
- einer zwischen der Membran und dem Sensorelement angeordneten Anpaßschicht,
- einer das Sensorelement außer einer an die Anpaßschicht angrenzenden Frontfläche vollständig umschließenden Schicht und
- einer einen im Gehäuse verbleibenden und das Gehäuse begrenzten Hohlraum ausfüllenden Dämpfungsschicht, wobei
- das Gehäuse durch die Membran einteilig abgeschlossen ist,
- die das Sensorelement umschließende Schicht eine das Sensorelement umschließende Spannungssymmetrisierungsschicht aus einem Duroplast, insb. aus einem Epoxidharz, ist,
- die Anpaßschicht koaxial von einem Spannring umschlossen wird und
- der im Gehäuse verbleibende Hohlraum durch den Spannring und die Spannungssymmetrisierungsschicht begrenzt und von einer Dämpfungsschicht ausgefüllt ist.

Gemäß einer Ausgestaltung der Erfindung weist der Spannring in radialer Richtung eine Dicke auf, bei der die Summe der Laufzeiten des Ultraschalls durch den Spannring und durch das Gehäuse in radialer Richtung gleich der Hälfte der Periodendauer des Ultraschalls ist.

Gemäß einer anderen Ausgestaltung der Erfindung besteht der Spannring aus einem Duroplast, insb. aus einem Epoxidharz, mit einer hohen Dichte, insb. von 1,7 g/cm³ bis 2,0 g/cm³, einer hohen akustischen Impedanz, insb. von ca.
40 10⁵ kg/s m² und einem geringen thermischen
Ausdehnungskoeffizienten, insb. von ca. 50 10⁻⁶ 1/K.

Gemäß einer weiteren Ausgestaltung der Erfindung besteht die Spannungssymmetrisierungsschicht aus einem Duroplast, insb. aus einem Epoxidharz, mit einer hohen Dichte, insb. ca. 1.5 g/cm³, einer hohen akustischen Impedanz, insb. von ca. 35 10⁵ kg/s m² und einem geringen thermischen Ausdehnungskoeffizienten, insb. von ca. 50 10⁻⁶ 1/K.

Gemäß einer weiteren Ausgestaltung der Erfindung weisen die Anpaßschicht und die Membran eine Dicke auf, bei der die Summe der Laufzeiten des Ultraschalls in der Anpaßschicht und in der Membran gleich einem Viertel der Periodendauer des Ultraschalls ist.

Gemäß einer weiteren Ausgestaltung der Erfindung besteht die Dämpfungsschicht aus einem Silikonelastomer.

Gemäß einer weiteren Ausgestaltung der Erfindung besteht die Spannungssymmetrisierungsschicht aus einem Material, dessen Glaspunkt bei einer Temperatur liegt, die ungefähr in der Mitte des Temperaturbereichs liegt, in der der Ultraschallwandler einsetzbar ist.

Die Erfindung und deren Vorteile werden anhand der Figur der Zeichnung, in der ein Ausführungsbeispiel dargestellt ist, näher erläutert; die Figur zeigt einen Längsschnitt durch einen Ultraschallwandler.

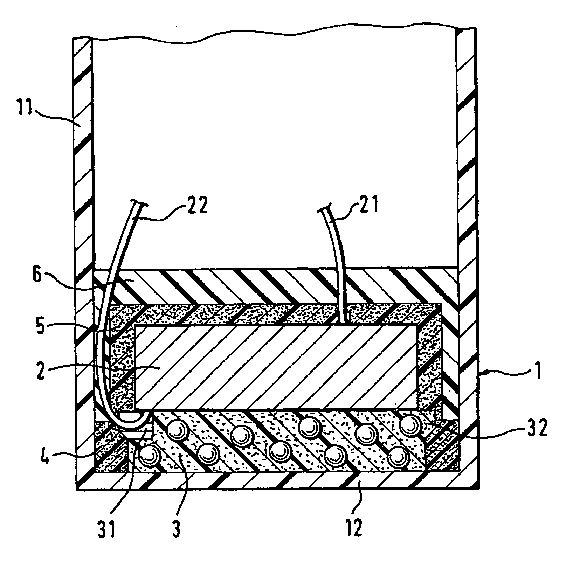

Das in Fig. 1 dargestellte Ausführungsbeispiel eines Ultraschallwandlers weist ein topfförmiges, einteiliges Gehäuse 1 auf. Dieses umfaßt einen Hohlzylinder 11, der endseitig von einer Membran 12 abgeschlossen ist. Das Gehäuse 1 besteht aus einem Kunststoff, vorzugsweise aus einem Thermoplast mit hoher chemischer Beständigkeit, z.B. Polyvinyldifluorid (PVDF) oder Polypropylen (PP). Die Membran 12 weist eine Dicke, z.B. von 2 mm, auf, wodurch eine hohe chemische und mechanische Beständigkeit gewährleistet ist.

Im Gehäuse 1 ist ein Sensorelement 2, das abwechselnd zur Aussendung und zum Empfang von Ultraschall-Impulsen dient, angeordnet. Es ist beispielsweise ein zylindrisches piezoelektrisches Element, insb. aus Blei-Titanat-Zirkonat, an dessen Kreisflächen Elektroden, z.B. auf das piezoelektrische Element aufgebrachte Silber-Metallisierungen, angeordnet sind. Mit den Elektroden sind elektrische Anschlußleitungen 21, 22 verbunden, z.B. aufgelötet.

Das Sensorelement 2 ist durch eine in der Figur nicht dargestellte elektronische Schaltung zu impulsförmigen Schwingungen anzuregen. Nach jeder Aussendung eines Ultraschall-Impulses dient das Sensorelement 2 als Empfangselement. Durch den an einer Oberfläche, z.B. eines Füllgutes, reflektierten Ultraschall-Impuls wird das Sensorelement 2 zu Schwingungen angeregt. Die resultierende piezoelektrische Spannung ist über die Anschlußleitungen 21, 22 einer weiteren, ebenfalls nicht dargestellten elektronischen Schaltung zuzuführen, die die Laufzeit des Ultraschall-Impulses ermittelt, daraus z.B. den Füllstand bestimmt und ein dem Füllstand entsprechendes Signal einer weiteren Verarbeitung und/oder Anzeige zugänglich macht.

Zur Anpassung der akustischen Impedanz des Sensorlements 2 an die akustische Impedanz des Mediums, in das die Ultraschall-Impulse zu senden sind, ist zwischen dem Sensorelement 2 und der Membran 12 eine Anpaßschicht 3 aus einem Kunststoff, angeordnet. Vorzugsweise ist dies ein Epoxidharz. Im Vergleich zu Polyurethan oder Silikonelastomeren weist Epoxidharz einen geringen thermischen Ausdehnungskoeffizienten auf.

Epoxidharz weist außerdem über einen sehr weiten Temperaturbereich von -50 °C bis 120 °C eine nahezu konstante Schallgeschwindigkeit und eine nahezu konstante Schallimpedanz auf. Die Abweichungen beider Werte betragen über den gesamten Temperaturbereich von -50 °C bis 120 °C weniger als 4,5 %.

Zur Anpaßung der akustischen Impedanz des piezoelektrischen Elements an die akustische Impedanz des Mediums, in das die Ultraschall-Impulse auszusenden sind, sind in der Anpaßschicht 3 Hohlkugeln, z.B. aus Glas, angeordnet.

Um einen maximalen Energietransfer durch die Anpaßschicht 3 hindurch zu gewährleisten, sind die Membran 12 und die Anpaßschicht 3 so auszubilden, daß die Summe der Laufzeiten des Ultraschalls in der Anpaßschicht 3 und in der Membran 12 gleich einem Viertel der Periodendauer des Ultraschalls ist.

Bei einer Sendefrequenz von 70 kHz und einer Membran 12 aus PVDF mit einer Dicke von 2 mm ergibt sich für eine Anpaßschicht 3 aus einem Epoxidharz mit einer Schallgeschwindigkeit von 2200 m/s eine Dicke der Anpaßschicht 3 von 4 mm. Bei einer entsprechend kleineren Dicke der Anpaßschicht 3 sind noch höhere Frequenzen von bis zu 100 kHz realisierbar. Bei gleicher Materialwahl und gleicher Membrandicke beträgt die Dicke der Anpaßschicht bei einer Frequenz von 100 kHz ca. 1,5 mm.

Die Anpaßschicht 3 ist beispielsweise ein Drehteil, das mittels eines Epoxidklebers mit dem Sensorelement 2 zu verbinden ist. Sie weist eine Ausnehmung 31 auf, durch die die Anschlußleitung 22 hindurch in das Gehäuse 1 geführt ist.

Spannungen, die dadurch entstehen, daß die Membran 12 einen größeren thermischen Ausdehnungskoeffizient als die Anpaßschicht 3 aufweist, werden durch die Anpaßschicht 3 auf das Sensorelement 2 übertragen. Bei hohen Temperaturen ist das Sensorelement 2 dadurch im wesentlichen Druckbelastungen, bei tiefen Temperaturen im wesentlichen Zugbelastungen ausgesetzt. Piezoelektrische Elemente sind verhältnismäßig robust gegenüber Druckbelastungen, Zugbelastungen können dagegen nur in sehr geringem Maß von dem Sensorelement 2 aufgenommen werden. Insb. bei sehr tiefen Temperaturen verursachen die thermischen Spannungen daher Risse oder einen Bruch des Sensorelements 2. Dies ist umso mehr der Fall, je kleiner die Dicke der Anpaßschicht 3 gegenüber der Dicke der Membran 12 ist. Gerade bei hohen Frequenzen sind jedoch aus den oben angeführten Gründen eine dünne Anpaßschicht 3 und eine dicke Membran 12 erforderlich.

Das Sensorelement 2 ist deshalb außer einer an die Anpaßschicht 3 angrenzenden Frontfläche von einer Spannungssymmetrisierungsschicht 5 aus einem Duroplast, insb. einem Epoxidharz, mit einer hohen Dichte, insb. von ca. 1,5 g/cm³, einer hohen akustischen Impedanz, insb. von ca. 35 10⁵ kg/s m², und einem geringen thermischen Ausdehnunskoeffizienten von ca. 50 10⁻⁶ 1/K umgeben.

Die Spannungssymmetrisierungsschicht 5 dient dazu, das Sensorelement 2 vor auftretenden Spannungen zu schützen. Da sie das Sensorelement 2 symmetrisch umgibt, wirken auf dies lediglich symmetrische Kräfte. Es treten insb. keine Kerbwirkungen auf. Die größten Spannungen treten, wie Finite-Elemente-Berechnungen zeigen, in der Spannungssymmetrisierungsschicht 5 auf und nicht mehr im Sensorelement 2. Die Wechselfestigkeit des Sensorelements 2 im eingebauten Zustand ist dadurch erheblich erhöht und Risse oder ein Bruch des Sensorelements 2 treten nicht mehr auf. Hierdurch ist der Ultraschallwandler auch bei sehr tiefen Temperaturen von bis zu -50 °C einsetzbar.

Der Glaspunkt des Materials der Spannungssymmetrisierungsschicht 5 liegt vorzugsweise in der Mitte des Temperaturbereichs, in dem der Ultraschallwandler einzusetzen ist, z.B. zwischen 30 °C und 40 °C bei einem Temperaturbereich von -50 °C bis 120 °C. Dadurch liegt bei tiefen Temperaturen eine feste Einspannung des Sensorelements 2 vor.

Bei hohen Temperaturen ist eine feste Einspannung des Sensorelements 2 nicht mehr zwingend erforderlich. Dort, also oberhalb des Glaspunkts des Materials der Spannungssymmetrisierungsschicht 5, ist diese elastischer und somit gegenüber temperaturbedingten Spannungen unempfindlicher. Durch die oben genannte Wahl des Glaspunkts ist es möglich, den Ultraschallwandler in einem sehr großen Temperaturbereich, von -50 °C bis 120 °C einzusetzen.

Zusätzlich wird durch die hohe akustische Impedanz der Spannungssymmetrisierungsschicht 5, insb. von ca. 35 10⁵ kg/s m², eine Dämpfung des in radialer und in membran-abgewandter Richtung abgestrahlten Ultraschalls bewirkt.

Zur Aufbringung der Spannungssymmetrisierungsschicht 5 wird der aus Sensorelement 2 und Anpaßschicht 3 gebildete Verbundschwinger z.B. in eine Form eingebracht, in die das flüssige Epoxidharz einzufüllen ist. Zur Befestigung einer solchen Form an dem Verbundschwinger weist die Anpaßschicht 3 auf der sensorelement-zugewandten Seite einen Absatzring 32 auf. Epoxidharz bietet den Vorteil, das es sehr gut auf einer Vielzahl von Materialien haftet.

Zur Verbesserung der Richtcharakteristik der zu sendenden Ultraschall-Impulse ist an der Membran 12 ein ringförmiger, die Anpaßschicht koaxial umschließender Spannring 4 angeordnet. Dieser besteht aus einem Duroplast, vorzugsweise aus einem Epoxidharz mit einer hohen Dichte von 1,7 g/cm³ bis 2 g/cm³ und bewirkt eine feste Einspannung der Anpaßschicht 3 in dem Gehäuse 1. Dadurch werden Amplitudenüberhöhungen am Membranrand unterdrückt und der Anteil der Schallenergie, der ausgesendet wird erhöht.

Der Anteil der Schallenergie, der bei einer vorgegebenen Frequenz zur Erzeugung des Meßsignals zur Verfügung steht, ist somit erheblich erhöht. Dies ist insb. bei hohen Frequenzen von Vorteil, da hochfrequente Ultraschallwellen in Luft eine stärkere Dämpfung erfahren als niederfrequente.

Gleichzeitig wird durch den Spannring 4 die Abstrahlung von Schallenergie in radialer Richtung reduziert. Hierzu weist der Spannring 4 eine hohe akustische Impedanz, insb. von ca. 40 10⁵ kg/s m² auf, und er weist in radialer Richtung eine Dicke auf, die so zu wählen ist, daß die Summe der Laufzeiten des Ultraschalls durch den Spannring 4 und durch das Gehäuse 1 in radialer Richtung gleich der Hälfte der Periodendauer des Ultraschalls ist.

Für eine Sendefrequenz von z.B. 70 kHz und einen Spannring 4 aus Epoxidharz mit einer Dichte von 1,8 g/cm³ und einer Schallgeschwindigkeit von 2300 m/s ergibt sich bei einem Gehäuse 1 aus Polyvinyldifluorid mit einer Wandstärke von 2 mm eine Dicke des Spannrings 4 von ca. 5 mm in radialer Richtung. Ein Abstand von 5 mm zwischen dem Sensorelement 2 und dem Gehäuse 1 ist ohnehin einzuhalten, damit das Schwingungsverhalten des Sensorelements 1 nicht durch die mechanische Kopplung an das Gehäuse 1 gestört ist. Die Abmessungen des Ultraschallwandlers bleiben durch den Spannring 4 also unverändert. Der Ultraschallwandler weist bei einer Frequenz von 70 kHz einen Außendurchmesser von 3,8 cm auf; bei einer Frequenz von 100 kHz beträgt der Außendurchurchmesser ca. 2,5 cm. Er ist in einem Temperaturbereich von -50 °C bis 120 °C einsetzbar.

Ein im Gehäuse 1 verbleibender, durch den Spannring 4, die Spannungssymmetrisierungsschicht 5 und das Gehäuse 1 begrenzter Hohlraum ist mit einer Dämpfungsschicht 6 aus einem Kunststoff ausgefüllt. Diese Dämpfungsschicht dient dazu, die Abstrahlung von Schallenergie in radialer und in membran-abgewandter Richtung zu minimieren und sie besteht vorzugsweise aus einem Silikonelastomer.

## Patentansprüche

1. Ultraschallwandler mit
- einem topfförmigen, durch eine Membran (12) abgeschlossenen Gehäuse (1),
- einem im Gehäuse (1) angeordneten Sensorelement (2) zum Senden und Empfangen von Ultraschall,
- einer zwischen der Membran (12) und dem Sensorelement (2) angeordneten Anpaßschicht (3),
- einer das Sensorelement (2) außer einer an die Anpaßschicht (3) angrenzenden Frontfläche vollständig umschließenden Schicht (5) und
- einer einen im Gehäuse (1) verbleibenden und das Gehäuse (1) begrenzten Hohlraum ausfüllenden Dämpfungsschicht (6),
**dadurch gekennzeichnet,**
- **daß** das Gehäuse (1) durch die Membran einteilig abgeschlossen ist,
- **daß** die das Sensorelement (2) umschließende Schicht eine das Sensorelement (2) umschließende Spannungssymmetrisierungsschicht (5) aus einem Duroplast, insb. aus einem Epoxidharz, ist,
- **daß** die Anpaßschicht (3) koaxial von einem Spannring (4) umschlossen wird und
- **daß** der im Gehäuse (1) verbleibende Hohlraum durch den Spannring (4) und die Spannungssymmetrisierungsschicht (5) begrenzt und von einer Dämpfungsschicht (6) ausgefüllt ist.

2. Ultraschallwandler nach Anspruch 1, bei dem der Spannring (4) in radialer Richtung eine Dicke aufweist, bei der die Summe der Laufzeiten des Ultraschalls durch den Spannring (4) und durch das Gehäuse (1) in radialer Richtung gleich der Hälfte der Periodendauer des Ultraschalls ist.

3. Ultraschallwandler nach Anspruch 1, bei dem der Spannring (4) aus einem Duroplast, insb. aus einem Epoxidharz, mit einer hohen Dichte, insb. von 1,7 g/cm³ bis 2,0 g/cm³, einer hohen akustischen Impedanz, insb. von ca. 40 10⁵ kg/s m², und einem geringen thermischen Ausdehnungskoeffizienten, insb. von ca. 50 10⁻⁶ 1/K, besteht.

4. Ultraschallwandler nach Anspruch 1, bei dem die Spannungssymmetrisierungsschicht (5) aus einem Duroplast insb. aus einem Epoxidharz, mit einer hohen Dichte, insb. von 1,5 g/cm³, einer hohen akustischen Impedanz, insb. von ca. 35 10⁵ kg/s m², und einem geringen thermischen Ausdehnungskoeffizienten, insb. von ca. 50 10⁻⁶ 1/K, besteht.

5. Ultraschallwandler nach Anspruch 1, bei dem die Anpaßschicht (3) aus einem mit Glashohlkugeln gefüllten Epoxidharz besteht, insb. mit einer Dichte, insb. von 0,4 g/cm³ bis 0,6 g/cm³, einer akustischen Impedanz von ca. 11 10⁵ kg/s m², und einem geringen thermischen Ausdehnungskoeffizienten, insb. von ca. 25 10⁻⁶ 1/K, besteht.

6. Ultraschallwandler nach Anspruch 1, bei dem die Dicke der Anpaßschicht (3) und die Dicke der Membran (12) derart sind, daß die Summe der Laufzeiten des Ultraschalls in der Anpaßschicht (3) und in der Membran (12) gleich einem Viertel der Periodendauer des Ultraschalls ist.

7. Ultraschallwandler nach Anspruch 1, bei dem die Dämpfungsschicht (6) aus einem Silikonelastomer besteht.

8. Ultraschallwandler nach Anspruch 1, bei dem bei dem die Spannungssymmetrisierungsschicht (5) aus einem Material besteht, dessen Glaspunkt bei einer Temperatur liegt, die ungefähr in der Mitte des Temperaturbereichs von -50° is 120°C liegt, in der der Ultraschallwandler einsetzbar ist.

## Claims

1. An ultrasonic transducer having
- a single-piece can-shaped housing (1) sealed off by a diaphragm (12),
- a sensor element (2), arranged in the housing (1), for transmitting and receiving ultrasound,
- a matching layer (3) arranged between the diaphragm (12) and the sensor element (2),
- a stress equalizing layer (5) which completely encloses the sensor element (2) apart from a front area adjoining the matching layer (3) and is made of a thermosetting plastic, especially of an epoxy resin,
- a clamping ring (4) coaxially enclosing the matching layer (3), and
- a damping layer (6) that fills a cavity that remains in the housing (1) and is bounded by the clamping ring (4), the stress equalizing layer (5) and the housing (1).

2. The ultrasonic transducer as claimed in claim 1, in which the clamping ring (4) has in the radial direction a thickness in which the sum of the propagation times of the ultrasound through the clamping ring (4) and through the housing (1) in the radial direction is equal to half of the periodic duration of the ultrasound.

3. The ultrasonic transducer as claimed in claim 1, in which the clamping ring (4) consists of a thermosetting plastic, especially of an epoxy resin, having a high density, especially of 1.7 g/cm³ to 2.0 g/cm³, a high acoustic impedance, especially of about 40·10⁵ kg/s m², and a low coefficient of thermal expansion, especially of about 50·10⁻⁶ 1/K.

4. The ultrasonic transducer as claimed in claim 1, in which the stress equalizing layer (5) consists of a thermosetting plastic, especially of an epoxy resin, having a high density, especially of 1.5 g/cm³, a high acoustic impedance, especially of about 35·10⁵ kg/s m², and a low coefficient of thermal expansion, especially of about 50·10⁻⁶ 1/K.

5. The ultrasonic transducer as claimed in claim 1, in which the matching layer (3) consists of an epoxy resin filled with hollow glass spheres, especially having a density of, in particular, 0.4 g/cm³ to 0.6 g/cm³, an acoustic impedance of about 11·10⁵ kg/s m², and a low coefficient of thermal expansion, especially of about 25·10⁻⁶ 1/K.

6. The ultrasonic transducer as claimed in claim 1, in which the thickness of the matching layer (3) and the thickness of the diaphragm (12) are such that the sum of the propagation times of the ultrasound in the matching layer (3) and in the diaphragm (12) is equal to one quarter of the periodic duration of the ultrasound.

7. The ultrasonic transducer as claimed in claim 1, in which the damping layer (6) consists of a silicone elastomer.

8. The ultrasonic transducer as claimed in claim 1, in which the stress equalizing layer (5) consists of a material whose glass point lies at a temperature which is located approximately in the center of the temperature range in which the ultrasonic transducer can be used.

## Revendications

1. Transducteur d'ultrasons comprenant
- un boîtier (1) en forme de pot fermé par une membrane (12),
- un élément capteur (2) disposé dans le boîtier (1) pour émettre et recevoir des ultrasons,
- une couche d'adaptation (3) disposée entre la membrane (12) et l'élément capteur (2),
- une couche (5) entourant complètement l'élément capteur (2) à l'exception d'une face frontale adjacent à la couche d'adaptation (3), et
- une couche d'amortissement (6) remplissant un espace creux restant dans le boîtier (1) et limitant le boîtier (1),
**caractérisé en ce que**
- le boîtier (1) est fermé par la membrane en une seule pièce,
- la couche entourant l'élément capteur (2) est une couche d'équilibrage de tension (5) entourant l'élément capteur (5) en une matière duroplastique, notamment une résiné époxy,
- la couche d'adaptation (3) est entourée coaxialement par une bague de serrage (4), et
- l'espace creux restant dans le boîtier (1) est limité par la bague de serrage (4) et la couche d'équilibrage de tension (5) et rempli par une couche d'amortissement (6).

2. Transducteur d'ultrasons selon la revendication 1, où la bague de serrage (4) présente dans le sens radial une épaisseur où la somme des temps de propagation des ultrasons dans la bague de serrage (4) et dans le boîtier (1) dans le sens radial est égale à la moitié de la durée de période des ultrasons.

3. Transducteur d'ultrasons selon la revendication 1, où la bague de serrage (4) est en une matière duroplastique, notamment une résine époxy, présentant une grande densité, notamment de 1,7 g/cm³ à 2,0 g/cm³, une grande impédance acoustique, notamment de 40 10⁵ kg/s m² environ, et un faible coefficient de détente thermique, notamment de 50 10⁻⁶ 1/K environ.

4. Transducteur d'ultrasons selon la revendication 1, où la couche d'équilibrage de tension (5) est en une matière duroplastique, notamment une résine époxy, présentant une grande densité, notamment de 1,5 g/cm³, une grande impédance acoustique, notamment de 35 10⁵ kg/s m² environ, et un faible coefficient de détente thermique, notamment de 50 10⁻⁶ 1/K environ.

5. Transducteur d'ultrasons selon la revendication 1, où la couche d'adaptation (3) est en une résine époxy chargée de billes de verre creuses, présentant notamment une densité notamment de 0,4 g/cm³ à 0,6 g/cm³, une impédance acoustique de 11 10⁵ kg/s m² environ, et un faible coefficient de détente thermique, notamment de 25 10⁻⁶ 1/K.

6. Transducteur d'ultrasons selon la revendication 1, où l'épaisseur de la couche d'adaptation (3) et l'épaisseur de la membrane (12) sont telles que la somme des temps de propagation des ultrasons dans la couche d'adaptation (3) et dans la membrane (12) est égale à un quart de la durée de période des ultrasons.

7. Transducteur d'ultrasons selon la revendication 1, où la couche d'amortissement (6) est en un élastomère de silicone.

8. Transducteur d'ultrasons selon la revendication 1, où la couche d'équilibrage de tension (5) est en une matière dont le point de verre se situe à une température qui se situe à peu près au milieu de la plage de températures comprises entre -50° et 120°C dans laquelle le transducteur d'ultrasons peut être utilisé.
